# EUROPÄISCHE PATENTSCHRIFT

(11) **EP 3 119 548 B1**
(45) Veröffentlichungstag und Bekanntmachung des Hinweises auf die Patenterteilung: **06.06.2018**
(21) Anmeldenummer: 15739502.1
(22) Anmeldetag: 20.03.2015
(51) Int. Cl.: B23B 51/06, C21D 10/00, C21D 9/22, B23B 51/02, C21D 1/09, C21D 1/10

(54) **PARTIELL GEHÄRTETES ROTATIONSWERKZEUG UND DIESBEZÜGLICHES HERSTELLVERFAHREN**
PARTIALLY HARDENED ROTARY TOOL AND CORRESPONDING PRODUCTION METHOD
OUTIL ROTATIF PARTIELLEMENT TREMPÉ ET SON PROCÉDÉ DE FABRICATION

(30) Priorität: 21.03.2014 DE 102014103906
(43) Veröffentlichungstag der Anmeldung: 25.01.2017
(73) Patentinhaber: Gühring KG, 72458 Albstadt (DE)
(72) Erfinder: BITZER, Jochen, 72461 Albstadt-trochtelfingen (DE); LANG, Steffen, Klaus, 72461 Albstadt-Tailfingen (DE)
(74) Vertreter: Spachmann, Holger
(86) Internationale Anmeldenummer: PCT/DE2015/000128
(87) Internationale Veröffentlichungsnummer: WO 2015/139680

(56) Entgegenhaltungen:
- DE-A1-102011 000 793
- US-A- 3 555 935
- US-A- 4 704 055
- US-A- 5 873 683
- US-A1- 2011 036 225
- US-A1- 2012 063 858

## Beschreibung

Die Erfindung betrifft ein Werkzeug gemäß dem Oberbegriff des Anspruchs 1 für eine spanende Bearbeitung von Werkstücken, das einen Grundkörper mit einem Spannabschnitt und einem Werkzeugkopf umfasst, der einen zumindest eine Spankante aufweisenden Spanbereich umfasst. Der Werkzeugkopf weist zumindest einen Kühlmittelkanal zur Zuführung eines Kühlschmierfluids in den Spanbereich auf. Des Weiteren betrifft die Erfindung ein Verfahren gemäß dem Oberbegriff des Anspruchs 6 zur Herstellung eines diesbezüglichen Drehwerkzeugs. Ein Beispiel eines solchen Werkzeugs bzw. Verfahrens ist in DE 10 2011 000 793 A1 offenbart.

### STAND DER TECHNIK

Aus dem Stand der Technik sind eine Vielzahl von Drehwerkzeugen bekannt, die einen Grundkörper mit einem Spannabschnitt und einem Werkzeugkopf aufweisen. Der Spannabschnitt kann eine Spannschaft oder eine besonders geformter axialer Endbereich des Drehwerkzeugs sein, der für die Aufnahme in eine spezielle Spannvorrichtung wie HSK-Spannvorrichtung ausgebildet ist und in der Regel am Werkzeugschaft axial gegenüberliegender Endbereich des Bohrwerkzeugs angeordnet ist. Bei einer Vielzahl von Drehwerkzeugen ist das metallische Material des Werkzeugkopfs gehärtet, um den hohen mechanischen Ansprüchen einer Spanbearbeitung zu genügen. Derartige Drehwerkzeuge können Bohr-, Reib-, Fräs- oder Polierwerkzeuge sein. In der Regel weisen derartige Drehwerkzeuge im Werkzeugkopf zumindest eine Spankante auf, durch die in einem spanabhebenden Arbeitsgang Material von einem Werkstück entfernt wird. Insbesondere bei Hochleistungsdrehwerkzeugen, beispielsweise HPC- (High Performance Cutting) oder HSC- (High,Speed Cutting) Drehwerkzeugen, sind im Drehwerkzeug ein oder mehrere Kühlmittelkanäle vorgesehen, um ein Kühl- oder Schmierfluid in den Bereich des Werkzeugkopfs einzubringen, um den Werkzeugkopf und die umfasste Spankante zu kühlen und Materialabraum aus dem Spanbereich abzuführen.

Zur Erhöhung der Lebensdauer und der Funktionseigenschaft eines Drehwerkzeugs wird in der Regel der Werkzeugkopf gehärtet, um die mechanische Widerstandsfähigkeit zu erhöhen. Dies erfolgt durch eine Änderung oder Umwandlung des Metallgefüges des Werkzeugkopfs, wobei dies durch eine Wärmebehandlung mit einer anschließenden schnellen Abkühlung bewirkt wird. Üblicherweise wird hierbei der gesamte Werkzeugkopf gehärtet, um die gewünschte Widerstandsfähigkeit zu erreichen.

Aus der DE 10 2011 000 793 A1 ist ein selbstschärfendes Bohrwerkzeug bekannt, bei dem ein Werkzeugkopf eines Grundkörpers mit einer ersten, geringeren Härte und einer Beschichtung mit einer zweiten, höheren Härte vorgesehen ist. Die Beschichtung dient dazu, eine gezielte Abrasion der Hauptschneidkante zu bewirken, um eine Selbstschärfung des Drehwerkzeugs zu erreichen. Als harte Beschichtung wird beispielsweise eine keramische Beschichtung vorgeschlagen, die an ausgewählten Stellen mechanisch wieder entfernt wird, um Bereiche geringerer Härte freizulegen. Somit wird aus dieser Druckschrift ein Drehwerkzeug vorgeschlagen, das mit einem härtbaren Überzug im Werkzeugkopf versehen ist, wobei Teilbereiche der härteren Beschichtung in einem nachfolgenden Arbeitsgang wieder abgenommen werden, um gezielt Härtungsbereiche im Werkzeugkopf mit verschiedenen Härten vorzusehen. Die härtere Beschichtung des Werkzeugkopfs dient dazu, eine selbstschärfende Wirkung des Drehwerkzeugs zu erreichen.

In der US 3 555 935 A wird ein Verfahren zur Herstellung eines Schneidwerkzeugs mit Kühlkanälen offenbart. Dabei wird ein Rohling mit zumindest einer Längsbohrung erhitzt und anschließend durch verdrehen verformt. In der Längsbohrung befindet sich ein Füllmaterial, das eine höhere Schmelztemperatur als das Material des Rohlings aufweist. Anschließend wird das komplette Werkzeug auf eine Aushärtetemperatur abgekühlt und das Füllmaterial entfernt.

Die US 4 704 055 A zeigt Bohrwerkzeug mit einem metallischen Bohrerspitzen-Trägerteil, auf den eine-Sintermetall-Bohrerspitze aufgesetzt ist, wobei zumindest ein wendelförmiger Kühlkanal im Innern des Schaftes angebracht ist. Der Bohrer-Schneidteil besteht aus verschleißfestem, zähem Stahl, der eine ausreichende Elastizität, Oberflächenhärte und Zähigkeit besitzt.

In der US 5 873 683 A wird ebenso ein Bohrwerkzeug mit auswechselbaren Schneidelementen und Spannuten offenbart. In den Spannuten befinden sich spanabführende Bereiche, die aus einem anderen, verschleißfesten Material oder durch einen lokalen Härtungsprozess verschleißfest ausgebildet sind. Der Verschleißbereich kann Rippen aufweisen, die dazu dienen die Späne besser von diesem Bereich zu lösen.

Die US 2011/036225 A1 offenbart ein Werkzeug mit einem Schaft und einem lösbaren Schneideinsatz, wobei der Schneideinsatz durch eine Drehbewegung fixiert und gelöst werden kann, sodass keine weiteren Befestigungsmittel notwendig sind. Der Schaft kann einen Kühlmittelkanal aufweisen.

In der US 2012/063858 A1 wird ein Wendeschneidplattenhalter mit spanabführenden Bereichen offenbart. Dieser Teilbereich innerhalb der Spannut kann lokal gehärtet eins. Die gehärtete Schicht kann bevorzugt Dicken von 0,05 mm bis 0,50 mm aufweisen. Diese Dicken ergeben sich daraus, dass ein besonders dünner Materialquerschnitt an der Bohrerspitze weiterhin stabil entgegen Sprödbruch ausgebildet sein sollte.

Das in der DE 10 2011 000793 A1 offenbarte Bohrwerkzeug ist dazu ausgebildet, in Gebrauch durch gezielte Abrasion selbst zu schärfen, wobei keine Änderung des geborenen Durchmessers erfolgen soll. Dazu ist die zur Bohrerspitze ausgerichtete Oberfläche zumindest im Bereich der Hauptschneiden an der Oberfläche vollflächig gehärtet oder beschichtet ausgebildet. Es wird vorgeschlagen, die Beschichtung auf der übrigen Freifläche durch eine nachträgliche Schleifbehandlung wieder zu entfernen.

Die US 2003/118413 A1 offenbart ein Fräs- oder Bohrwerkzeug, das einen austauschbaren Werkzeugkopf und damit austauschbare Schneidkanten aufweist. Der Werkzeugkopf ist dabei aus zwei unterschiedlichen Materialien ausgebildet.

Im Bereich der Bearbeitung von Aluminium und Weichmetallwerkstoffen, die einen höheren Siliziumgehalt aufweisen, kommt es zu einem hohen Verschleiß eines Drehwerkzeugs aufgrund der Zähigkeit des zu bearbeitenden Werkstücks. Hierdurch werden insbesondere dünnwandige Flächen im Werkzeugkopf eines Drehwerkzeugs, die einen Kühlkanal begrenzen, mechanisch wie thermisch strapaziert, wodurch diese nach längerer Benutzung des Drehwerkzeugs ausdünnen und verschleißen. Hierdurch besteht die Gefahr, dass insbesondere die Wandungsbereiche um einen Kühlkanal und um eine Austrittsdüse des Kühlkanals brechen und somit die mechanische Stabilität des Drehwerkzeugs, die Schmierfähigkeit und die Lebensdauer eingeschränkt werden. Aufgabe der Erfindung ist es daher, ein Drehwerkzeug und ein Herstellverfahren vorzuschlagen, das einen dauerhaften Einsatz und eine hohe Bearbeitungsqualität, insbesondere bei Aluminiumwerkstoffen mit hohem Siliziumgehalt und anderen weichmetallischen und zähen Werkstoffen ermöglicht.

Diese Aufgabe wird durch ein Werkzeug und ein Herstellverfahren nach den unabhängigen Ansprüchen gelöst. Vorteilhafte Weiterentwicklungen der Erfindung sind Gegenstand der Unteransprüche.

### OFFENBARUNG DER ERFINDUNG

Gegenstand der Erfindung ist ein Bohr-, Reib-, Fräs- oder Polierwerkzeug für eine spanende Bearbeitung von Werkstücken, das einen Grundkörper mit einem Spannabschnitt und einem Werkzeugkopf, der einen zumindest eine Spankante aufweisenden Spanbereich umfasst. Der Werkzeugkopf weist zumindest einen Kühlmittelkanal zur Zuführung eines Kühl- und Schmiermittels in der Spannut des Spanbereichs auf. Es wird vorgeschlagen, dass ein oder mehrere partielle Oberflächenabschnitte des Spanbereichs einen Härtungsbereich ausbilden, der den Kühlmittelkanal abdeckt und/oder begrenzt und oberflächengehärtet ist, so dass der oder die partiellen Oberflächenabschnitte zwischen der Außenfläche des Werkzeugkopfs und dem Kühlmittelkanal eine höhere Härte als die übrigen metallischen Oberflächenbereiche des Werkzeugkopfs aufweisen. Das erfindungsgemäße Werkzeug ist somit in den begrenzenden Abschnitten eines Kühlmittelkanals oberflächengehärtet, so dass dünne Stege zwischen der Außenfläche des Werkzeugkopfs und dem Kühlmittelkanal eine höhere Härte als die übrigen metallischen Bereiche des Werkzeugkopfs aufweisen. Die Oberflächenhärtung kann eine ähnliche Härte wie Spankanten oder Spanplatten des Werkzeugkopfs aufweisen, aber eine höhere Härte als ein Oberflächenbereich einer Spannut oder eines Umfangsabschnitts des Werkzeugkopfs. Eine derartige partielle Oberflächenhärtung kann durch ein selektives Härtungsverfahren erreicht werden. Im Härtungsbereich ist die dünne Außenschicht des Werkzeugkopfs in Martensit umgewandelt, um eine widerstandsfähige und langlebige Begrenzungsfläche des Kühlkanals bereitzustellen. Hierdurch können partielle Oberflächenabschnitte beliebiger Konturform oberflächengehärtet werden. Dadurch lassen sich Kühlkanäle gezielt an zu kühlende und schmierende Oberflächenbereiche des Werkzeugkopfs heranführen, die nur von geringen Materialdicken umgeben sind. Dadurch lässt sich eine verbesserte Kühlmittelwirkung erreichen und ein Werkzeug mit einer hohen Standzeit gewährleisten.

In einer vorteilhaften Ausführungsform kann ein im Wesentlichen runder oder elliptischer Härtungsbereich konzentrisch um eine Kühlkanalaustrittsdüse ausgebildet sein. Die Härtungsbereiche können insbesondere um die Austrittsstellen des Kühlmittelfluids angeordnet sein, so dass an exponierten Stellen, an denen hohe mechanische Kräfte und thermische Belastung auftreten, Kühlmittel aus dem Kühlmittelkanal austreten kann. Die unmittelbar an die Austrittsdüse angrenzenden Bereiche im Werkzeugkopf können oberflächengehärtet sein, um eine höhere Standfestigkeit und mechanische Stabilisierung des Werkzeugkopfs um den Bereich des Kühlmittelaustrittskanals bereitzustellen.

Nach einer weiteren vorteilhaften Ausführungsform der Erfindung kann ein im Wesentlichen langgezogener und streifenförmiger, dem Verlauf des Kühlmittelkanals im Inneren des Werkzeugkopfs folgender und den Kühlmittelkanal überdeckender Härtungsbereich, entlang einer Spannut ausgebildet sein. So kann ein Oberflächenbereich, der den Kühlmittelkanal überdeckt, als Härtungsbereich ausgebildet sein, um eine relativ dünne Materialdecke des Kühlmittelkanals mechanisch zu verstärken und deren thermische Belastbarkeit zu erhöhen. Der Kühlmittelkanal verläuft in vielen Fällen entlang einer Spannut in Richtung des Zentrums des Drehwerkzeugs, wobei relativ dünne Materialabdeckungen gegenüber der Außenfläche der Spannut, insbesondere unmittelbar in der Nähe der Kühlmittelkanalaustrittsdüse, vorgesehen sind. Werden derartige langgezogene, insbesondere streifenförmige Bereiche durch einen selektiven Oberflächenhärtungsprozess gehärtet, so wird die Gefahr eines Durchbruchs oder einer Materialabnutzung deutlich reduziert und die Standdauer des Werkzeugkopfs erhöht.

Besonders vorteilhaft kann der Härtungsbereich durch eine selektive Randschichtaustenitisierung des Oberflächenmaterials des Spanbereichs ausgebildet werden. Diese Randschichtaustenitisierung wird durch eine Oberflächenhärtung oder auch Randschichthärtung genanntes Verfahren hergestellt, um bei metallischen Bauteilen die äußeren Schichten zu härten. Es werden nur dünne Oberflächenbereiche der Randschicht austenitisiert, wobei im Inneren des Werkstücks die hohe Zähigkeit des Ausgangsmaterials vorhanden bleibt und damit Elastizität und Nachgiebigkeit des Materials nicht beeinträchtigt wird. Die Oberfläche wird hingegen hart und verschleißfest ausgebildet, so dass die Schwingungsfestigkeit und die Druckbeständigkeit des Werkzeugkopfes erhalten bleiben. Dennoch wird die Steifigkeit gerade im Bereich des Härtungsbereichs erhöht und die Verschleißfestigkeit verbessert.

In einer besonders vorteilhaften Ausführungsform wird die selektive Randschichtaustenitisierung mittels eines Laserstrahlhärteverfahrens, eines Elektronenstrahlhärteverfahrens, eines lonenstrahlhärteverfahrens oder durch ein Induktionshärten erreicht. Vorteilhafterweise wird die Oberflächenhärtung durch ein selektives Härtungsverfahren, insbesondere Elektronenstrahlhärtungsverfahren oder lonenstrahlhärtungsverfahren oder Laserstrahlhärtungsverfahren, durchgeführt. Beim Laser- und Elektronenstrahl- sowie Ionenstrahlhärtungsverfahren können extrem kleinflächige Härtungsbereiche mit geringen Härtetiefen bereitgestellt werden, wobei ein hochenergetischer Laser-, Elektronen- oder lonenstrahl auf die partiellen Oberflächenbereiche punktförmig in einer sehr kurzen Zeit ein Aufheizen des Oberflächenmaterials auf die Austenitisierungstemperatur bewirkt. Durch ein nachfolgendes Abschrecken kann die gewünschte Härtung erreicht werden. Bei der Elektronen- und lonenstrahlhärtung wird dies unter einer Vakuumatmosphäre durchgeführt, wobei ein Vakuumbearbeitungsschritt eingesetzt werden muss. Im Falle eines Laserstrahlhärtungsverfahrens kann unter Luftatmosphäre ein selektives Härten der partiellen Oberflächenbereiche erfolgen. Beim Induktionshärten werden die Oberflächenbereiche einem wechselnden Magnetfeld ausgesetzt um lokal begrenzt Wirbelströme zu erzeugen, die ein lokales Erhitzen mit nachfolgendem Aushärten ermöglichen. Das Induktivhärten weist eine geringere Punktpräzision gegenüber einem Laserstrahl-, lonenstrahl- oder Elektronenstrahlhärteverfahren auf und bietet sich insbesondere für großflächige Härtungsbereiche von großvolumigen Bohrwerkzeugen an. Der anlagentechnische Aufwand für ein Induktionshärtungsverfahren ist demgegenüber geringer als für die vorgenannten Strahlhärteverfahren.

Besonders bevorzugt wird das Laserstrahlhärtungsverfahren zur Erhöhung der Standfestigkeit der Oberflächenbereiche des Kühlmittelkanals eingesetzt. Dies bietet zum einen eine präzise Kontrolle der Ausdehnung der Härtungsbereiche bei einer relativ kurzen Zeitspanne der Energiezufuhr unter einer Luftatmosphäre. Insbesondere kann ein Diodenlaser anstelle eines CO₂-Lasers eingesetzt werden, da die kürzere Wellenlänge nahe einer Infrarotwellenlänge, des Diodenlasers wesentlich besser in Bohrstahl absorbiert wird, als die höhere Wellenlänge eines CO₂-Lasers. Zum anderen ist der elektrische Wirkungsgrad du die Lebensdauer eines Diodenlasers deutlich höher als der eines CO₂-Lasers, insbesondere bei Anwendung in einer Massenfertigung, was zu reduzierter Herstellszeit und -kosten führt. Durch die vorgenannten selektiven Oberflächenhärtungsverfahren können verschleißbedrohte Bereiche des Werkzeugkopfs, insbesondere Berandungen des Kühlmittelkanals konturgenau und präzise gegenüber dem umgebenden Werkzeugmaterial gehärtet oder nachgehärtet werden. Durch den schnellen Wärmeeintrag bei praktisch gleichzeitiger Selbstabschreckung können kurze Härtezeiten und damit eine hohe Produktionsgeschwindigkeit beim Herstellen von Drehwerkzeugen mit partiellen Härtebereichen der Kühlmittelkanäle überdeckenden Werkstoffflächen erreicht werden.

In einem nebengeordneten Aspekt der Erfindung wird ein Verfahren zur Herstellung eines Werkzeugs vorgeschlagen, wobei während oder nach Herstellen des Werkzeugs aus einem Grundkörper eine selektive Oberflächenhärtung von einem oder mehreren partiellen Oberflächenabschnitt des Spanbereichs des Werkzeugkopfs erfolgt, bei dem ein, einen Kühlmittelkanal des Werkzeugs abdeckender und/oder begrenzender Oberflächenabschnitt oberflächengehärtet wird, um den zumindest einen Härtungsbereich auszubilden, wobei im Innern des Werkzeugs die hohe Zähigkeit des Ausgangsmaterials bestehen bleibt. Somit zielt das Verfahren auf eine Modifikation eines üblichen Herstellverfahrens des Werkzeugs, bei dem bereits während der Werkzeugherstellung oder nach Beendigung der Werkzeugherstellung ein selektiver Oberflächenhärtungsschritt vorgesehen wird, durch den partielle Oberflächenbereiche, die den Kühlmittelkanal des Werkzeugs begrenzen, oberflächengehärtet werden.

Es bietet sich vorzugsweise an, dass zur partiellen Oberflächenhärtung ein Randschichthärtungsverfahren als Laserstrahlhärteverfahren, als Elektronenstrahlhärtungsverfahren, als lonenstrahlhärtungsverfahren oder als Induktionshärtungsverfahren eingesetzt wird. Die vorgenannten Verfahren, insbesondere das Laserstrahlhärtungsverfahren, bieten die Möglichkeit, dass gezielt ausgesuchte Oberflächenbereiche des Werkzeugkopfs gehärtet werden können, um flexibel in verschiedenen und komplexen Geometrien des Werkzeugs partielle Oberflächenbereiche zu härten, um eine hohe Oberflächenhärte von kühlmittelkanalabdeckenden Bereichen, die dünnwandig sein können, auszubilden. Hierdurch wird ermöglicht, dass eine Mehrzahl von Kühlmittelkanälen vorgesehen werden, und das Kühlfluid an besonders beanspruchte Bereiche zugeführt werden kann, wobei die Standzeit des Drehwerkzeugs und die Kühleigenschaft deutlich verbessert werden können. Es wird hierdurch ermöglicht, eine verbesserte Fluidschmierung, insbesondere eine verbesserte MMS-Schmierung (Minimalmengenschmierung) zu erreichen, wobei dünnwandige Kühlkanäle mit Austrittsdüsen nahe den zu schmierenden Spankanten vorgesehen werden können.

Vorteilhafterweise bietet es sich an, dass zur partiellen Oberflächenhärtung des Werkzeugs dieses relativ zu einer selektiv härtenden Härtungsvorrichtung bewegt wird, um den partiellen Oberflächenbereich zu austenitisieren. Hierbei wird vorgeschlagen, dass zum Randschichthärten der partiellen Oberflächenbereiche entweder das Werkzeug gegen einen Laserstrahlkopf, eine Elektronen- oder lonenstrahlquelle oder gegen eine Magnetspule eines Induktionshärtungsverfahrens bewegt wird, oder dass die Härtungsvorrichtung gegenüber dem Werkzeug bewegt wird. In der Regel wird es vorteilhaft sein, das Werkzeug, das eine geringe Masse und eine freie Beweglichkeit aufweist, gegenüber einer feststehenden Härtungsvorrichtung zu bewegen, um selektiv die partiellen Oberflächenbereiche zu austenitisieren.

### ZEICHNUNGEN

Weitere Vorteile ergeben sich aus der vorliegenden Zeichnungsbeschreibung. In den Zeichnungen sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- **Fig. 1**: schematisch einen Werkzeugkopf eines Ausführungsbeispiels eines erfindungsgemäßen Werkzeugs mit Härtungsbereichen;
- **Fig. 2**: perspektivisch ein Bohrwerkzeug mit Härtungsbereichen;
- **Fig. 3**: eine Draufsicht auf eine Stirnfläche eines Werkzeugbereichs eines weiteren Ausführungsbeispiels eines Werkzeugs;
- **Fig. 4**: perspektivisch ein Werkzeug mit partiell gehärteten Oberflächenbereichen;
- **Fig. 5**: perspektivisch ein Ausführungsbeispiel eines Langlochdrehwerkzeugs
- **Fig. 6**: ein weiteres Langlochdrehwerkzeug
- **Fig. 7**: perspektivisch ein weiteres Ausführungsbeispiel eines Werkzeugs entsprechend der Erfindung.

In den Figuren sind gleiche oder gleichartige Komponenten mit gleichen Bezugszeichen beziffert.

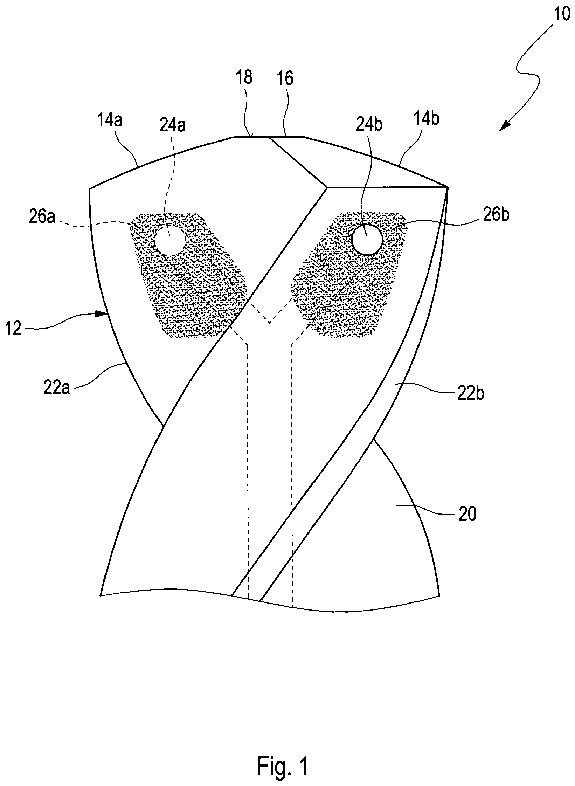

In der Fig. 1 ist ein Werkzeugkopf 12 eines Drehwerkzeugs 10 dargestellt. Der Werkzeugkopf 12 umfasst zwei Hauptschneidekanten 14a und 14b, die durch eine Querschneide 16 miteinander verbunden sind. Zwischen den beiden Hauptschneidekanten 14a, 14b erstreckt sich eine Spannut 20, die die Flanken der Schneidkanten 14a, 14b voneinander trennen. Die Spannut 20 ist von Sekundärschneidkanten der Schneidphase 22a, 22b begrenzt. In den Nutenflächen sind Auslassbereiche eines Kühlmittelkanals 24a (gestrichelt gezeichnet) und 24b eingelassen, die von einem Hauptkühlmittelkanal, der sich entlang der Achse des Drehwerkzeugs 10 erstreckt, abzweigen. Im konzentrischen Oberflächenbereich um die Auslässe 24a, 24b ist die Freifasenfläche als Härtungsbereich 26a und 26b mit lokal gehärteter Oberfläche ausgebildet, um bei hoher thermischer und mechanischer Belastung ein Durchbrechen der relativ dünnen Werkstoffwand gegenüber dem Kühlmittelkanal 24a, 24b zu verhindern. Der Härtungsbereich 26a, 26b kann beispielsweise durch ein Laserhärtungsverfahren selektiv erhitzt und anschließend abgeschreckt werden, um eine erhöhte Härte gegenüber dem restlichen Bereich des Werkzeugkopfes 12 auszubilden.

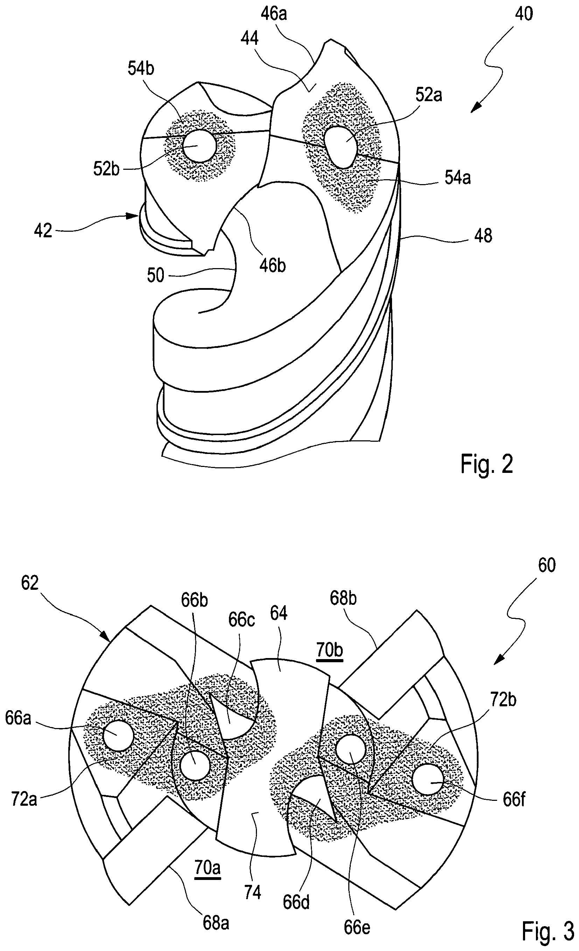

In der Fig. 2 ist in einer perspektivischen Darstellung ein weiteres Bohrwerkzeug 40 dargestellt, das als Reibbohrwerkzeug ausgebildet ist. Der Werkzeugkopf 42 des Reibbohrwerkzeugs 40 umfasst zwei Hauptschneidkanten 46a und 46b zur Reibbearbeitung eines Senkbodens eines Werkstücks. Zur Kühlung der Hauptschneidkante 46 und Spanabfuhrt sind auf Stirnfläche 44 Auslassbereiche von Kühlmittelkanälen 52a und 52b angeordnet. Die Härtungsbereiche 54 sind jeweils konzentrisch um die Auslassbereiche 52a und 52b angeordnet, um ein Durchbrechen der relativ dünnen Werkstoffwand bei hoher mechanischer und thermischer Belastung zu verhindern. Die Kühlmittelkanäle 52a und 52b sind entlang der Wandung, die von einer spiralförmigen Strannut 50 ausgebildet ist, geführt. Eine Sekundärschneidkante 48 entlang der Flanke der Außenwände des Reibbohrwerkzeugs 40 dient zum Reiben eines Bohrlochs und zur Politur der Werkstückoberfläche innerhalb der geschaffenen Vertiefung.

In der Fig. 3 ist ein Werkzeugkopf 62 eines PKD-Bohrwerkzeugs 60 dargestellt. Auf dem Spitzenabschnitt 64 des Werkzeugkopfs 62 sind zwei PKD-Schneiden 68a und 68b angeordnet, die jeweils an eine Spannut 70a bzw. 70b grenzen. Auf der Stirnfläche 74 sind mehrere Kühlmittelkanalauslässe 66a bis 66f angeordnet, die ein Schmier- und Kühlfluid in verschiedene Richtungen der Stirnfläche 74 abgeben können, und somit einen effektiven Spantransport über die Spannuten 70 und Kühlung des Werkzeugkopfs 62 erreichen. Jeweils eine Gruppe von drei Kühlmittelkanalauslässen 66a, 66b und 66c sowie 66e, 66d und 66f sind mit einem gemeinsamen, konzentrisch um die Auslässe 66 definierter Aushärtebereich 72a und 72b zusammengefasst, die die Oberflächenbereiche rund um die Auslässe 66 des Kühlmittelkanals verstärken und eine höhere Standzeit des PKD-Werkzeugkopfes 62 ermöglichen. Die durch Randschichthärtung verstärkten Bereiche 72 um die Kühlmittelkanäle 66 verhindern ein Durchbrechen bei hoher thermischer und mechanischer Belastung.

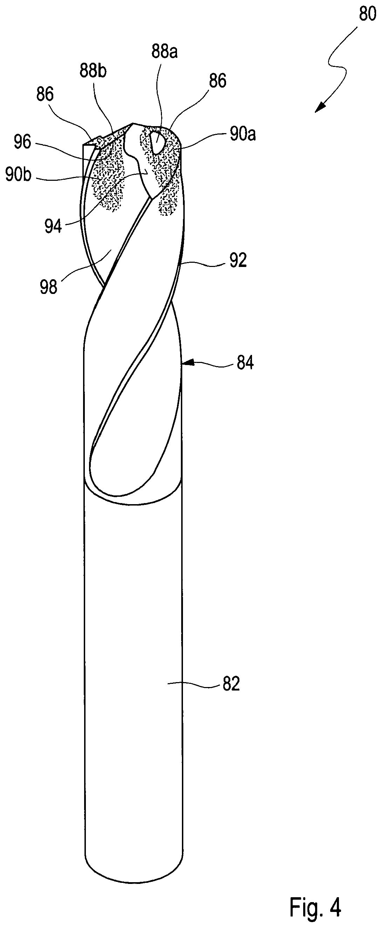

In der Fig. 4 ist ein Beispiel eines Bohrwerkzeugs 80 perspektivisch dargestellt. Das Bohrwerkzeug 80 umfasst einen Schaft als Spannabschnitt 82 und einen Werkzeugkopf 84, der mehrere Schneidkanten 96 und eine gewendelte Fase 92 als Begrenzung einer Spannut 98 trägt. Die Schneidkanten 96 sind auf einer Stirnfläche 94 des Werkzeugkopfs 84 angeordnet. Zwei Kühlmittelkanäle 88a, 88b weisen konturierte Auslässe auf der Stirnfläche 94 auf. Die Auslässe sind durch Stege 86 gegenüber der Umfangsoberfläche des Werkzeugkopfs 84 begrenzt. Konzentrisch um die Auslässe der Kühlmittelkanäle 88a, 88b sind elliptische Härtungsbereiche 90 angeordnet. Entlang der Spannut 98 sind streifenförmig weitere Härtungsbereiche, die gestrichelt dargestellt sind, vorgesehen, die die relativ dünne Materialwand zwischen Kühlkanal 88a, 88b und der Spannutoberfläche 98 begrenzen.

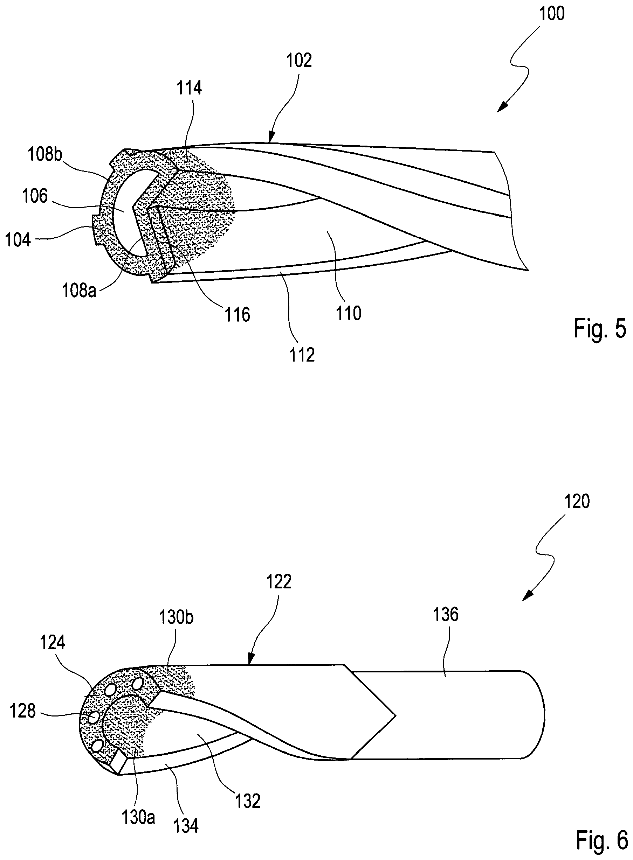

In den Fig. 5 und 6 sind zwei unterschiedliche Beispiele von Tieflochbohrern 100 und 120 dargestellt. Jeder Tieflochbohrer 100, 120 weist einen Hohlschaft als Spannabschnitt 136 und einen Werkzeugkopf 102 bzw. 122 auf. Der Werkzeugkopf 102, 122 umfasst eine Fasenschneidkante 112, 134 und weist auf seiner Stirnfläche 104, 124 einen Kühlmittelkanalausgang 106 bzw. mehrere Kühlmittel-Austrittsdüsen 128 auf, die Kühlfluid zur Kühlung und Spanabführung von einer Kopfschneidkante 116 bzw. 138 zuführen. In einer Spannut 110 bzw. 132 werden Späne abgeführt, die durch das Schmier- und Kühlfluid herausgespült werden können. Der Tieflochbohrer 100 weist an der Begrenzungskante der Stirnfläche 104 Stabilisierungsstege 108a und 108b auf der Mantelfläche auf. Im Hohlschaft 136 des Tieflochbohrers 120 ist am Einspannende ein nicht dargestellter Einlass des Kühlmittelkanals vorgesehen. Auf den Stirnflächen 104, 124 des Werkzeugkopfs 102, 122, die die Kühlmittelkanalaustrittsdüsen 128 des Kühlmittelkanals 106 bzw. 128 umfassen, sind Härtungsbereiche 114 bzw. 130a und 130b angeordnet, die auf der Stirnfläche 104, 124 und zumindest einen streifenförmigen Bereich der Spannut 110 bzw. 132 überdecken. Mittels einer Fasenschneidkante 112 bzw. 134, die die Spannut 110, 132 begrenzt, wird ein Tiefioch weiter ausgeschnitten und geweitet.

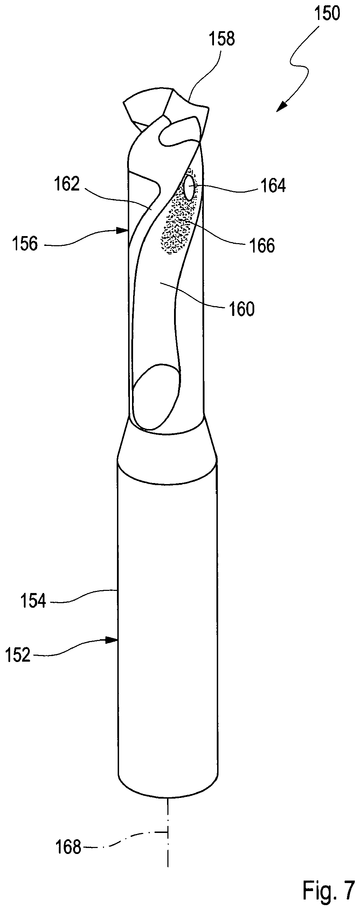

Schließlich zeigt Fig. 7 ein weiteres perspektivisches Ausführungsbeispiel eines Drehwerkzeugs 150 mit einem partiell gehärteten Oberflächenbereich zum Schutz eines Kühlmittelkanals 164. Das Drehwerkzeug 150 umfasst einen Grundkörper 152 mit einer Achse 168, der einen Spannschaft als Spannabschnitt 154 und einen Werkzeugkopf 156 ausbildet. Im Werkzeugkopf 156 ist eine Kopfschneidkante 158 sowie eine Spannut 160 vorgesehen. Die Spannut 160 wird von einer Fasenschneidkante 162 begrenzt. In der Spannut 160 befindet sich ein Auslass für einen Kühlmittelkanal 164, der von einem langgezogenen, streifenförmigen Härtungsbereich 166 umgeben ist, der die Wandung der Spannut 160 gegenüber dem Kühlmittelkanal 164 verstärkt, um eine höhere Standzeit des Drehwerkzeugs 150 zu ermöglichen.

Insbesondere bei der Bearbeitung von Aluminiumwerkstoffen mit höherem Siliziumgehalt kann es zu einem hohen Verschleiß eines Bohrwerkzeugs kommen, wodurch ein unerwünschter Durchbruch einer Kühlkanalwandung erfolgen kann. Zur Verhinderung eines Durchbruchs besteht die Möglichkeit, durch ein selektives Oberflächenhärtungsverfahren, insbesondere Laserstrahlverfahrens, die den Kühlmittelkanal abdeckenden Bereiche des Werkzeugkopfs zu härten. Vorteil eines selektiven Härtungsverfahrens ist, dass man ausgesuchte Bereiche härten kann, und somit flexibel partielle Oberflächenbereiche des Werkzeugkopfs gegenüber mechanischem Verschleiß schützen kann. Als Härtungsverfahren kann insbesondere das Laserstrahlverfahren, aber auch Elektronenstrahlverfahren, lonenstrahlhärteverfahren oder auch ein induktives Härteverfahren eingesetzt werden.

### Bezugszeichenliste

- 10: Drehwerkzeug
- 12: Werkzeugkopf
- 14: Hauptschneidkante
- 16: Querschneide
- 18: Stirnfläche
- 20: Spannut
- 22: Sekundärschneidkante
- 24: Kühlmittelkanal
- 26: Härtungsbereich
- 28:
- 30:
- 32:
- 34:
- 36:
- 38:
- 40: Reibbohrwerkzeug
- 42: Werkzeugkopf
- 44: Stirnfläche
- 46: Hauptschneidkante
- 48: Sekundärschneidkante / Schneidfase
- 50: Spannut
- 52: Kühlmittelkanal
- 54: Härtungsbereich
- 56:
- 58:
- 60: PKD-Bohrwerkzeug
- 62: Werkzeugkopf
- 64: Spitzenabschnitt
- 66: Kühlmittelkanal
- 68: PKD-Schneiden
- 70: Spannut
- 72: Härtungsbereich
- 74: Stirnfläche
- 76:
- 78:
- 80: Bohrwerkzeug
- 82: Schaft, Spannabschnitt
- 84: Werkzeugkopf
- 86: Steg
- 88: Kühlmittelkanal mit Konturauslass
- 90: Härtungsbereich
- 92: Fase
- 94: Stirnfläche
- 96: Schneidkante
- 98: Spannut
- 100: Tieflochbohrer
- 102: Werkzeugkopf
- 104: Stirnfläche
- 106: Kühlmittelkanal
- 108: Steg
- 110: Spannut
- 112: Fasenschneidkante
- 114: Härtungsbereich
- 116: Kopfschneidkante
- 118:
- 120: Tieflochbohrer
- 122: Werkzeugkopf
- 124: Stirnfläche
- 128: Kühlmittel-Austrittsdüse
- 130: Härtungsbereich
- 132: Spannut
- 134: Fasenschneidkante
- 136: Hohlschaft
- 138: Kopfschneidkante
- 140:
- 142:
- 144:
- 146:
- 148:
- 150: Bohrwerkzeug
- 152: Grundkörper
- 154: Schaft, Spannabschnitt
- 156: Werkzeugkopf
- 158: Kopfschneidkante
- 160: Spannut
- 162: Fasenschneidkante
- 164: Kühlmittelkanal
- 166: Härtungsbereich
- 168: Werkzeugachse

## Patentansprüche

1. Bohr-, Reib-, Fräs-, oder Polierwerkzeug (10, 40, 60, 80, 100, 120, 150) für eine spanende Bearbeitung von Werkstücken, umfassend einen Grundkörper (152) mit einem Spannabschnitt (82, 136, 154) und einem Werkzeugkopf (12, 42, 62, 84, 102, 122, 156), der einen zumindest eine Spankante (14, 22, 46, 48, 68, 96, 112, 116, 134, 138, 158, 162) aufweisenden Spanbereich umfasst, wobei der Werkzeugkopf zumindest einen Kühlmittelkanal (24, 52, 66, 88, 106, 126, 164) zur Zuführung eines Kühl- und Schmierfluids in den Spanbereich umfasst, **dadurch gekennzeichnet, dass** ein oder mehrere partielle Oberflächenabschnitte des Spanbereichs mit einer beliebigen Konturform zumindest einen Härtungsbereich (26, 54, 72, 90, 114, 130, 166) ausbilden, der den Kühlmittelkanal (24, 52, 66, 88, 106, 126, 164) abdeckt und/oder begrenzt und oberflächengehärtet ist, so dass der oder die partiellen Oberflächenabschnitte als dünne Stege in einer Spannut (20, 50, 70, 98, 110, 132, 160) des Spanbereichs zwischen der Außenfläche des Werkzeugkopfs (12, 42, 62, 84, 102, 122, 156) und dem Kühlmittelkanal (24, 52, 66, 88, 106, 126, 164) ausgebildet sind, und im Inneren eine hohe Zähigkeit des Ausgangsmaterials vorhanden bleibt, wobei der eine oder die mehreren widerstandsfähigen partiellen Oberflächenabschnitte des Kühlkanals (24, 52, 66, 88, 106, 126, 164) eine höhere Oberflächenhärte als die übrigen metallischen Oberflächenbereiche des Werkzeugkopfs (12, 42, 62, 84, 102, 122, 156) aufweisen.

2. Bohr-, Reib-, Fräs-, oder Polierwerkzeug (10, 40, 60, 80, 100, 120, 150) nach Anspruch 1, **dadurch gekennzeichnet, dass** ein im Wesentlichen runder oder elliptischer Härtungsbereich (26, 54, 72, 90, 114, 130, 166) konzentrisch um eine Kühlmittelkanal-Austrittsdüse (128) an einer Stirnfläche (18, 44, 74, 94, 104, 124) oder Seitenfläche ausgebildet ist.

3. Bohr-, Reib-, Fräs-, oder Polierwerkzeug (10, 40, 60, 80, 100, 120, 150) nach einem der vorgenannten Ansprüche, **dadurch gekennzeichnet, dass** ein im Wesentlichen langgezogener und streifenförmiger, einem Verlauf des Kühlmittelkanals (24, 52, 66, 88, 106, 126, 164) im Inneren des Werkzeugkopf (12, 42, 62, 84, 102, 122, 156) folgender und den Kühlmittelkanal (24, 52, 66, 88, 106, 126, 164) überdeckender Härtungsbereich (26, 54, 72, 90, 114, 130, 166) ausgebildet ist.

4. Bohr-, Reib-, Fräs-, oder Polierwerkzeug (10, 40, 60, 80, 100, 120, 150) nach einem der vorgenannten Ansprüche, **dadurch gekennzeichnet, dass** der Härtungsbereich (26, 54, 72, 90, 114, 130, 166) durch eine selektive Randschichtaustenitisierung des Oberflächenmaterials des Spanbereichs ausgebildet ist.

5. Bohr-, Reib-, Fräs-, oder Polierwerkzeug (10, 40, 60, 80, 100, 120, 150) nach Anspruch 4, **dadurch gekennzeichnet, dass** die Randschichtaustenitisierung mittels eines Laserstrahlhärteverfahrens, Elektronenstrahlhärteverfahrens, lonenstrahlhärteverfahrens oder durch ein Induktionshärten erfolgt.

6. Verfahren zur Herstellung eines Bohr-, Reib-, Fräs-, oder Polierwerkzeug (10, 40, 60, 80, 100, 120, 150) nach einem der vorgenannten Ansprüche, **dadurch gekennzeichnet, dass** während oder nach Herstellen des Bohr-, Reib-, Fräs-, oder Polierwerkzeugs (10, 40, 60, 80, 100, 120, 150) aus einem Grundkörper (152) eine selektive Oberflächenhärtung mit einer beliebigen Konturform von einem oder mehreren partiellen Oberflächenabschnitten des Spanbereichs des Werkzeugkopfs (12, 42, 62, 84, 102, 122, 156) zur Ausbildung zumindest eines Härtungsbereich (26, 54, 72, 90, 114, 130, 166) erfolgt, durch den zumindest ein einen Kühlmittelkanal (24, 52, 66, 88, 106, 126, 164) des Bohr-, Reib-, Fräs-, oder Polierwerkzeugs (10, 40, 60, 80, 100, 120, 150) abdeckender und/oder begrenzender Oberflächenabschnitt als dünner Steg zwischen der Außenfläche des Werkzeugkopfs (12, 42, 62, 84, 102, 122, 156) und dem Kühlmittelkanal (24, 52, 66, 88, 106, 126, 164) in einer Spannut (20, 50, 70, 98, 110, 132,160) des Spanbereichs ausgebildet und oberflächengehärtet wird, und im Innern des Werkstücks die hohe Zähigkeit des Ausgangsmaterials bestehen bleibt, wobei der eine oder die mehreren widerstandsfähigen partiellen Oberflächenabschnitte des Kühlkanals (24, 52, 66, 88, 106, 126, 164) eine höhere Oberflächenhärte als die übrigen metallischen Oberflächenbereiche des Werkzeugkopfs (12, 42, 62, 84, 102, 122, 156) aufweisen.

7. Verfahren nach Anspruch 6, **dadurch gekennzeichnet, dass** zur partiellen Oberflächenhärtung ein Randschichthärtungsverfahren als Laserstrahlhärtungsverfahren, als Elektronenstrahlhärtungsverfahren, als lonenstrahlhärtungsverfahren oder als Induktionshärtungsverfahren verwendet wird.

8. Verfahren nach einem der Ansprüche 6 oder 7, **dadurch gekennzeichnet, dass** zur partiellen Oberflächenhärtung das Bohr-, Reib-, Fräs-, oder Polierwerkzeugs (10, 40, 60, 80, 100, 120, 150) relativ zu einer selektiv härtenden Härtungsvorrichtung bewegt wird, um den partiellen Oberflächenbereich zu dem Härtungsbereich (26, 54, 72, 90, 114, 130, 166) zu austenitisieren.

## Claims

1. Drilling, reaming, milling, or polishing tool (10, 40, 60, 80, 100, 120, 150) for machining workpieces, comprising a basic element (152) with a clamping section (82, 136, 154) and with a tool head (12, 42, 62, 84, 102, 122, 156) that comprises a cutting area having at least one cutting edge (14, 22, 46, 48, 68, 96, 112, 116, 134, 138, 158, 162), where said tool head comprises at least one coolant duct (24, 52, 66, 88, 106, 126, 164) for feeding a cooling and lubricating fluid into said cutting area, **characterized in that** one or more partial surface sections of said cutting area with any contour shape form at least one hardened area (26, 54, 72, 90, 114, 130, 166) which covers and/or limits said coolant duct (24, 52, 66, 88, 106, 126, 164) and is surface-hardened, such that said partial surface section(s) are formed as thin webs in a flute (20, 50, 70, 98, 110, 132, 160) of the cutting area between the outer face of said tool head (12, 42, 62, 84, 102, 122, 156) and said coolant duct (24, 52, 66, 88, 106, 126, 164), and in the interior a high toughness of the original material is maintained, where the one or more resistant partial surface section(s) of said cooling duct (24, 52, 66, 88, 106, 126, 164) have a higher surface hardness than the other metallic surface areas of said tool head (12, 42, 62, 84, 102, 122, 156).

2. Drilling, reaming, milling, or polishing tool (10, 40, 60, 80, 100, 120, 150) according to claim 1, **characterized in that** a substantially round or elliptical hardened area (26, 54, 72, 90, 114, 130, 166) is formed on an end face (18, 44, 74, 94, 104, 124) or a side face concentrically about a coolant duct outlet nozzle (128).

3. Drilling, reaming, milling, or polishing tool (10, 40, 60, 80, 100, 120, 150) according to one of the above claims, **characterized in that** a substantially elongated and strip-like hardened area (26, 54, 72, 90, 114, 130, 166) is formed, following a course of the coolant duct (24, 52, 66, 88, 106, 126, 164) in the interior of the tool head (12, 42, 62, 84, 102, 122, 156) and covering said coolant duct (24, 52, 66, 88, 106, 126, 164).

4. Drilling, reaming, milling, or polishing tool (10, 40, 60, 80, 100, 120, 150) according to one of the above claims, **characterized in that** the hardened area (26, 54, 72, 90, 114, 130, 166) is formed by selective surface layer austenitization of the surface material of the cutting area.

5. Drilling, reaming, milling, or polishing tool (10, 40, 60, 80, 100, 120, 150) according to claim 4, **characterized in that** surface layer austenitization is achieved by means of a laser beam hardening method, an electron beam hardening method, an ion beam hardening method or by induction hardening.

6. Method for manufacturing a drilling, reaming, milling, or polishing tool (10, 40, 60, 80, 100, 120, 150) according to one of the above claims, **characterized in that** during or after manufacture of said drilling, reaming, milling, or polishing tool (10, 40, 60, 80, 100, 120, 150) from a basic element (152) selective surface hardening is achieved of one or more partial surface section(s) with any contour shape of the cutting area of said tool head (12, 42, 62, 84, 102, 122, 156) to form at least one hardened area (26, 54, 72, 90, 114, 130, 166), by which at least one surface section covering and/or limiting a coolant duct (24, 52, 66, 88, 106, 126, 164) of said drilling, reaming, milling, or polishing tool (10, 40, 60, 80, 100, 120, 150) is formed as a thin web between the outer surface of said tool head (12, 42, 62, 84, 102, 122, 156) and said coolant duct (24, 52, 66, 88, 106, 126, 164) in a flute (20, 50, 70, 98, 110, 132, 160) of the cutting area and is surface-hardened, and in the interior of the workpiece the high toughness of the original material is maintained, where the one or more resistant partial surface section(s) of said cooling duct (24, 52, 66, 88, 106, 126, 164) have a higher surface hardness than the other metallic surface areas of said tool head (12, 42, 62, 84, 102, 122, 156).

7. Method according to claim 6, **characterized in that** for partial surface hardening a surface layer hardening method is used, such as a laser beam hardening method, an electron beam hardening method, an ion beam hardening method or an induction hardening method.

8. Method according to one of claims 6 or 7, **characterized in that** for partial surface hardening the drilling, reaming, milling, or polishing tool (10, 40, 60, 80, 100, 120, 150) is moved relative to a selective hardening device in order to austenitize the partial surface area into the hardened area (26, 54, 72, 90, 114, 130, 166).

## Revendications

1. Outil de perçage, d'alésage, de fraisage ou de polissage (10, 40, 60, 80, 100, 120, 150) pour un usinage par enlèvement de copeaux de pièces d'oeuvre, comprenant un corps de base (152) avec une section de serrage (82, 136, 154) et une tête d'outil (12, 42, 62, 84, 102, 122, 156) qui comprend une zone d'enlèvement de copeaux présentant au moins une arête coupante (14, 22, 46, 48, 68, 96, 112, 116, 134, 138, 158, 162), sachant que la tête d'outil comprend au moins un conduit de liquide de refroidissement (24, 52, 66, 88, 106, 126, 164) pour alimenter la zone d'enlèvement de copeaux en fluide de refroidissement et de lubrification, **caractérisé en ce qu'**une ou plusieurs sections superficielles partielles de la zone d'enlèvement de copeaux avec un contour de forme quelconque forment au moins une zone de durcissement (26, 54, 72, 90, 114, 130, 166) qui couvre et/ou délimite le conduit de liquide de refroidissement (24, 52, 66, 88, 106, 126, 164) et est durcie en surface de manière à ce que la ou les sections superficielles partielles soient conçues sous forme de fins méplats dans une rainure à copeaux (20, 50, 70, 98, 110, 132, 160) de la zone d'enlèvement de copeaux entre la surface extérieure de la tête d'outil (12, 42, 62, 84, 102, 122, 156) et le conduit de liquide de refroidissement (24, 52, 66, 88, 106, 126, 164) et qu'une grande ténacité du matériau initial persiste à l'intérieur, sachant que ladite ou lesdites sections superficielles partielles résistantes du conduit de liquide de refroidissement (24, 52, 66, 88, 106, 126, 164) présentent une dureté superficielle plus élevée que les autres zones superficielles métalliques de la tête d'outil (12, 42, 62, 84, 102, 122, 156).

2. Outil de perçage, d'alésage, de fraisage ou de polissage (10, 40, 60, 80, 100, 120, 150) selon la revendication 1, **caractérisé en ce qu'**une zone de durcissement essentiellement ronde ou elliptique (26, 54, 72, 90, 114, 130, 166) est constituée sur une surface frontale (18, 44, 74, 94, 104, 124) ou une surface latérale de manière concentrique autour d'une buse de sortie du conduit de liquide de refroidissement (128).

3. Outil de perçage, d'alésage, de fraisage ou de polissage (10, 40, 60, 80, 100, 120, 150) selon une des revendications précédentes, **caractérisé en ce qu'**est formée une zone de durcissement (26, 54, 72, 90, 114, 130, 166) essentiellement allongée, en forme de bande, suivant un tracé du conduit de liquide de refroidissement (24, 52, 66, 88, 106, 126, 164) à l'intérieur de la tête d'outil (12, 42, 62, 84, 102, 122, 156) et recouvrant ledit conduit de liquide de refroidissement (24, 52, 66, 88, 106, 126, 164).

4. Outil de perçage, d'alésage, de fraisage ou de polissage (10, 40, 60, 80, 100, 120, 150) selon une des revendications précédentes, **caractérisé en ce que** la zone de durcissement (26, 54, 72, 90, 114, 130, 166) est formée par une austénitisation sélective de la couche périphérique du matériau superficiel de la zone d'enlèvement de copeaux.

5. Outil de perçage, d'alésage, de fraisage ou de polissage (10, 40, 60, 80, 100, 120, 150) selon la revendication 4, **caractérisé en ce que** l'austénitisation de la couche périphérique a lieu au moyen d'un procédé de durcissement au rayon laser, d'un procédé de durcissement par faisceau d'électrons, d'un procédé de durcissement par faisceau ionique ou d'un durcissement par induction.

6. Procédé de fabrication d'un outil de perçage, d'alésage, de fraisage ou de polissage (10, 40, 60, 80, 100, 120, 150) selon une des revendications précédentes, **caractérisé en ce qu'**a lieu, pendant ou après la fabrication de l'outil de perçage, d'alésage, de fraisage ou de polissage (10, 40, 60, 80, 100, 120, 150) à partir d'un corps de base (152) un durcissement superficiel sélectif avec un contour de forme quelconque d'une ou de plusieurs sections superficielles partielles de la zone d'enlèvement de copeaux de la tête d'outil (12, 42, 62, 84, 102, 122, 156) pour former au moins une zone de durcissement (26, 54, 72, 90, 114, 130, 166), par le biais duquel au moins une section superficielle limitant et/ou recouvrant un conduit de liquide de refroidissement (24, 52, 66, 88, 106, 126, 164) de l'outil de perçage, d'alésage, de fraisage ou de polissage (10, 40, 60, 80, 100, 120, 150) est conçue sous forme de fin méplat entre la surface extérieure de la tête d'outil (12, 42, 62, 84, 102, 122, 156) et le conduit de liquide de refroidissement (24, 52, 66, 88, 106, 126, 164) dans une rainure à copeaux (20, 50, 70, 98, 110, 132, 160) de la zone d'enlèvement de copeaux et est durcie en surface et qu'une grande ténacité du matériau initial persiste à l'intérieur, sachant que ladite ou lesdites sections superficielles partielles résistantes du conduit de liquide de refroidissement (24, 52, 66, 88, 106, 126, 164) présentent une dureté superficielle plus élevée que les autres zones superficielles métalliques de la tête d'outil (12, 42, 62, 84, 102, 122, 156).

7. Procédé selon la revendication 6, **caractérisé en ce qu'**est utilisé, pour le durcissement superficiel partiel, un procédé de durcissement de la couche périphérique, tel qu'un procédé de durcissement au rayon laser, un procédé de durcissement par faisceau d'électrons, un procédé de durcissement par faisceau ionique ou un procédé de durcissement par induction.

8. Procédé selon une des revendications 6 ou 7, **caractérisé en ce que** l'outil de perçage, d'alésage, de fraisage ou de polissage (10, 40, 60, 80, 100, 120, 150) est déplacé, pour le durcissement superficiel partiel, relativement à un dispositif de durcissement durcissant de manière sélective pour austé-nitiser la zone superficielle partielle afin d'en faire la zone de durcissement (26, 54, 72, 90, 114, 130, 166).
